# FASCICULE DE BREVET EUROPEEN

(11) **EP 3 469 832 B1**
(45) Date de publication et mention de la délivrance du brevet: **05.01.2022**
(21) Numéro de dépôt: 17735189.7
(22) Date de dépôt: 07.06.2017
(51) Int. Cl.: H04W 36/14, H04W 48/18, H04W 28/08, H04W 88/06, H04W 84/04, H04W 36/22

(54) **PROCEDES ET DISPOSITIFS DE SELECTION D'UNE INTERFACE DE COMMUNICATION**
VERFAHREN UND VORRICHTUNGEN ZUR AUSWAHL EINER KOMMUNIKATIONSSCHNITTSTELLE
METHODS AND DEVICES FOR SELECTING A COMMUNICATION INTERFACE

(30) Priorité: 10.06.2016 FR 1655375
(43) Date de publication de la demande: 17.04.2019
(73) Titulaire: ORANGE, 92130 Issy-les-Moulineaux (FR)
(72) Inventeur: BOUVET, Bertrand, 22700 Perros-Guirec (FR)
(86) Numéro de dépôt international: PCT/FR2017/051435
(87) Numéro de publication internationale: WO 2017/212173

(56) Documents cités:
- EP-A1- 2 445 266
- EP-A2- 1 463 364
- WO-A1-2013/042330
- US-A1- 2005 197 156
- US-A1- 2014 133 294
- US-A1- 2014 233 386

## Description

### Domaine technique

La présente invention se rapporte au domaine des télécommunications et plus particulièrement à des procédés, un dispositif de point d'accès et un terminal de communication permettant une sélection automatique d'un réseau d'accès optimal pour établir une communication à partir dudit terminal.

### Art antérieur

Alors que les premiers réseaux mobiles de 4eme génération LTE (Long Term Evolution) sont en cours de déploiement, les opérateurs mettent à disposition des utilisateurs les premiers services conversationnels basés sur cette technologie. On entend ainsi dans cette description par VoLTE la technologie de transmission de la voix selon la technologie LTE et par VxLTE les services de communication en général reposant sur la technologie LTE. De même, les signes VoWifi et VxWifi se rapportent respectivement à la transmission des services de voix sur Wi-Fi et aux services de communication en général sur Wi-Fi.

Ces nouveaux réseaux de communications prévoient le transport des communications vocales en mode paquet, contrairement aux technologies précédentes (GSM, RTC) dans lesquelles les communications vocales sont établies en mode circuit. Les communications sont établies au travers d'une architecture réseau IMS (Internet Multimedia Subsystem). Le standard prévoit la possibilité d'utiliser différents réseaux d'accès pour établir les communications. Par exemple, une communication vocale peut être établie indifféremment par l'intermédiaire d'un réseau d'accès Wi-Fi ou 4G.

Les terminaux offrent souvent des moyens de configuration plus ou moins compliqués visant à permettre aux utilisateurs de choisir le réseau d'accès à utiliser selon les circonstances. Par exemple, un utilisateur peut configurer son terminal de façon à ce qu'il utilise un point d'accès Wifi lorsqu'il est à son domicile et un réseau d'accès 4G lorsqu'il est en situation de mobilité. Ainsi, les terminaux peuvent être préconfigurés par les opérateurs ou les utilisateurs de façon à ce que les communications soient établies par l'intermédiaire d'un réseau Wi-Fi à chaque fois que cela est possible.

On connaît des terminaux disposant d'une interface utilisateur adaptée pour paramétrer un mode de connexion préféré du terminal selon les circonstances. Par exemple, des terminaux permettent à l'utilisateur de préciser s'il souhaite que les communications vocales soient systématiquement établies en Wifi (VoWifi : Voice over Wi-Fi), ou bien systématiquement selon le standard LTE (VoLTE : Voice Over LTE), ou bien encore de préférence en VoWifi lorsqu'un réseau est disponible, etc... L'utilisateur peut aussi n'autoriser les communications VoWifi que lorsqu'un réseau particulier est disponible. Par exemple, un utilisateur peut décider d'autoriser les communications VoWifi uniquement lorsque le réseau Wifi de son domicile est disponible. Ces terminaux présentent l'inconvénient de demander une configuration complexe et parfois hasardeuse.

On connaît également des terminaux capables de sélectionner automatiquement un réseau Wi-Fi ou LTE selon une information de contexte. Par exemple, certain terminaux analysent le niveau du signal radio pour sélectionner l'interface de communication la plus prometteuse en termes de qualité de service. Ainsi, bien qu'un utilisateur ait indiqué par configuration qu'il souhaite une connexion VoWifi lorsqu'un réseau wifi est disponible, le terminal peut décider d'utiliser une connexion LTE si le niveau du signal Wi-Fi est inférieur à un seuil prédéterminé, et inversement. Ce mode de fonctionnement n'est toutefois pas entièrement satisfaisant. Un inconvénient peut se faire particulièrement ressentir lorsqu'une communication est établie à partir d'un point d'accès Wi-Fi partagé, comme par exemple un point d'accès public.

Les points d'accès publics, comme par exemple les « hot spots » Wi-Fi mis à disposition de leurs clients par différents établissement publics tels que des aéroports, bars, ou restaurants, sont partagés par un grand nombre d'utilisateurs. Lorsque les utilisateurs sont particulièrement nombreux à utiliser le point d'accès, les communications peuvent être dégradées alors même que le niveau du signal radio est de très bonne qualité. Une telle dégradation est due à l'encombrement du réseau d'accès et non à la qualité du signal et provoque généralement une incompréhension de l'utilisateur qui ne peut que constater que la communication est de mauvaise qualité malgré un bon niveau du signal. L'utilisateur n'a alors le choix que de mettre fin à la communication et de forcer l'établissement d'une nouvelle communication via LTE via une reconfiguration de son terminal.

Les opérateurs télécom ne maîtrisent pas les points d'accès Wi-Fi qui sont le plus souvent sous la responsabilité des établissements les hébergeant. C'est pourquoi la qualité des communications n'est pas garantie dans ces circonstances. Il y a donc un risque pour les opérateurs de voir leur clientèle se détourner de l'usage des communications VoWifi. Or, l'utilisation d'un point d'accès Wi-Fi présente des avantages pour les opérateurs, car ils permettent de décharger le réseau cellulaire sur lequel l'établissement de communications est plus onéreux et ils permettent d'étendre la couverture cellulaire.

Le document US 2014/01333294 décrit un procédé permettant de déporter du trafic d'un premier réseau d'accès (par exemple, WWAN) vers un deuxième réseau d'accès (par exemple, WLAN). Dans certains cas, le premier réseau d'accès peut diffuser une indication d'un niveau de préférence pour le déport du trafic pour un ou plusieurs types d'application vers le premier ou le second réseau d'accès. Un équipement utilisateur peut déterminer quel réseau d'accès utiliser pour transmettre des données sur la base de cette indication et des conditions actuelles du système (par exemple, chargement relatif des premier et second réseaux d'accès).

Le document US 2014/0233386 décrit un procédé permettant de déporter des connexions sans fil entre un réseau LTE et un réseau WiFi. Le procédé comprend l'obtention d'une politique de sélection de technologie d'accès (ATSP) à partir d'au moins une des fonctions de découverte et de sélection de réseau d'accès (ANDSF), de pré-configuration et d'entité de gestion mobile (MME), dans lequel l'ATSP comprend la modification de valeurs de seuil ATSP ANDSF sur la base d'au moins une des caractéristiques radio et des conditions de charge du nœud de réseau d'accès radio (RAN) par le nœud RAN; un envoi des valeurs de seuil ATSP modifiées à un équipement utilisateur (UE), une mise à jour de la politique ANDSF avec les valeurs de seuil ATSP modifiées par l'UE et détermination du déport de l'UE d'un premier réseau d'accès radio vers un deuxième réseau d'accès radio par l'UE.

Il existe donc un besoin pour une solution permettant de garantir qu'un réseau d'accès Wi-Fi n'est sélectionné par un terminal que s'il permet l'établissement de communications de bonne qualité.

### Résumé de l'invention

A cet effet, l'invention concerne un procédé selon la revendication 1.

Grâce à l'invention, une interface réseau optimale est sélectionnée selon la charge effective du réseau d'accès lorsqu'une communication doit être établie. La « charge du réseau d'accès » doit se comprendre ici comme une valeur représentative du trafic en cours sur le réseau d'accès, distincte de la qualité du signal radio. En effet, la qualité d'une transmission via un réseau sans fil de type Wi-Fi dépend non seulement de la qualité du signal radio, mais aussi de la charge du réseau qui évolue indépendamment du niveau de signal. A la différence d'un réseau d'accès Wi-Fi dans lequel la qualité de service n'est jamais garantie, un réseau cellulaire 2G/3G/4G possède des mécanismes de réservations de ressources (2G/3G) ou de priorisation des trafics (4G) selon les services utilisés qui permettent d'éviter la surcharge du réseau et de fournir des services avec une bonne qualité de service pour les services les plus prioritaires. Dans ce cas, seule la qualité du signal radio est représentative de la qualité de la communication sur le réseau d'accès cellulaire. Ainsi, grâce à l'invention, si un utilisateur préfère établir une communication VoWiFi, pour des raisons de tarification des communications par exemple, le terminal autorise la communication Wi-Fi uniquement lorsque le réseau d'accès permet une communication de qualité correcte. Les étapes du procédé de sélection peuvent être exécutées suite à la détection d'une demande d'établissement de communication ou au préalable d'une telle demande.

Selon un mode particulier de réalisation, le procédé est tel qu'il comporte en outre, lorsque la communication est établie via la première interface de communication, les étapes suivantes :
- détermination d'une valeur représentative de la qualité de la communication établie à partir de données de communication reçues, et
- bascule de la communication sur la seconde interface de communication si la valeur représentative de la qualité de la communication n'excède pas un seuil.

Lorsqu'une communication est en cours sur une première interface de communication sélectionnée selon le procédé de sélection automatique, le procédé selon l'invention détermine une valeur représentative de la qualité de la communication à partir des données de communication échangées. Par exemple, le procédé peut comptabiliser le nombre de paquets non reçus à partir des numéros de séquence des paquets et calculer un taux d'erreurs de transmission, ou mettre en œuvre tout autre mécanisme permettant de constater des erreurs ou délais de transmission. Lorsque cette valeur représentative excède une valeur prédéterminée, le procédé effectue une bascule de la communication vers une seconde interface de communication. Grâce à l'invention, une communication établie via un réseau d'accès offrant une qualité de service non garantie, comme par exemple à partir d'un réseau Wi-Fi, est automatiquement basculée sur un réseau de communication dont la qualité de service est garantie, tel qu'un réseau cellulaire 2G/3G/4G, lorsque la qualité est inférieur à un seuil.

Selon une réalisation particulière, le procédé est tel que la valeur représentative de la charge du premier réseau est déterminée au moins à partir du taux de période sans trafic mesuré sur le réseau.

De façon connue, les terminaux et points d'accès Wi-Fi se mettent en écoute avant d'émettre une trame de données de façon à éviter les collisions lors de l'émission de la trame, chaque terminal et/ou point d'accès utilisant des périodes aléatoires pour émettre lorsqu'il n'y a pas de trafic.

Le taux de période sans trafic est représentatif de l'activité sur un réseau. Ainsi, on peut déduire un encombrement du réseau si un faible taux de période sans trafic est mesuré. Un tel critère est ainsi particulièrement pertinent lors de la sélection d'une interface réseau.

Plus particulièrement, un terminal Wi-Fi souhaitant émettre des données écoute le réseau. Si le réseau est encombré, la transmission est différée. Dans le cas contraire, si le média est libre pendant un temps donné, alors le terminal peut émettre. Pour cela, il émet une demande d'émission contenant des informations sur le volume des données qu'il souhaite émettre et sa vitesse de transmission. Le point d'accès acquitte la réception de ce message et le terminal commence à émettre. Les autres terminaux patientent pendant un temps qu'ils estiment être celui nécessaire à la transmission du volume d'information à émettre à la vitesse annoncée.

Selon un mode particulier de réalisation, la valeur représentative de la charge du premier réseau est déterminée au moins à partir d'une répartition des périodes sans trafic sur une fenêtre temporelle.

Une répartition régulière des périodes sans trafic permet un envoi régulier des paquets de données de communication. Une régularité dans l'envoi des données de communication, en particulier des données audio, est nécessaire à une communication de bonne qualité. Le procédé permet ainsi d'estimer de manière fiable la qualité d'une communication établie sur un réseau d'accès particulier.

Selon un mode particulier de réalisation, la charge du premier réseau d'accès est déterminée au moins à partir du taux de collision des trames de données échangées sur le premier réseau. De façon connue, plus un réseau de communication est chargé, plus le taux de collision entre les trames échangées par les différents dispositifs utilisateurs du réseau augmente. L'invention propose de tirer parti de cette corrélation afin de déterminer une valeur représentative de la charge du réseau.

Selon une réalisation particulière de l'invention, la première interface est en outre sélectionnée selon une valeur représentative de la qualité du signal radio émis par un point d'accès auquel est connectée ladite interface.

Une donnée représentative de la qualité du signal radio combinée à une donnée représentative de la charge du réseau permet de sélectionner de manière fiable une interface qui permette d'obtenir une communication de de bonne qualité.

La détermination, selon la revendication 1, d'une valeur représentative de la charge du premier réseau d'accès , qui comprend l'obtention d'une valeur représentative de la charge du premier tronçon du premier réseau d'accès, situé en amont du point d'accès, entre le terminal et le point d'accès, et la réception de la charge du second tronçon du premier réseau d'accès, situé en aval dudit point d'accès, en réponse à l'émission vers le point d'accès d'une demande de transmission d'une indication de la charge dudit second tronçon, permet par exemple à un terminal de déterminer la charge d'un réseau d'accès à partir de la charge d'un point d'accès Wi-Fi et de la charge d'un réseau ADSL auquel est raccordé le point d'accès Wi-Fi. De cette façon, le procédé permet avantageusement d'éviter qu'un réseau d'accès soit sélectionné sur la base de la charge d'un premier tronçon alors que la charge d'un second tronçon rend impossible l'établissement d'une communication de bonne qualité.

Selon un mode de réalisation particulier, le procédé est tel que le premier réseau est un réseau de type Wi-Fi et le second réseau est un réseau cellulaire.

Ainsi, l'invention est particulièrement adaptée pour être mise en œuvre dans un terminal disposant à la fois d'une interface de communication adaptée pour établir des communications au travers d'un réseau d'accès cellulaire, comme par exemple une interface de communication 3G ou 4G, et d'une interface de communication adaptée pour établir des communications au travers d'un réseau d'accès dont la qualité n'est pas garantie , comme par exemple un réseau d'accès Wi-Fi. Une telle disposition est particulièrement avantageuse pour les opérateurs télécom qui peuvent ainsi encourager leurs utilisateurs à passer des appels via un réseau Wi-Fi disponible plutôt qu'au travers d'un réseau d'accès cellulaire. En effet, le coût pour l'opérateur d'une communication établie via un point d'accès Wi-Fi est bien moindre qu'une communication établie via un réseau d'accès cellulaire. Toutefois, un opérateur ne peut inciter un abonné à privilégier l'utilisation d'un réseau Wi-Fi que si la qualité de service est comparable à celle obtenue en utilisant un réseau cellulaire. La sélection du réseau Wi-Fi n'étant réalisée que lorsque la charge de ce dernier permet l'établissement de communications de bonne qualité, l'utilisateur est garanti d'obtenir une qualité de service satisfaisante.

Selon un mode particulier de réalisation, le procédé comporte une étape d'affichage d'une indication représentative de la charge du réseau sur un écran du terminal.

De manière classique, la charge d'un réseau de communication auquel est connecté un terminal n'est pas représentée de manière visuelle. Seul un indicateur de qualité du signal radio est représenté. L'utilisateur d'un tel terminal ne peut donc pas sélectionner une interface réseau dont la charge est compatible avec l'établissement d'une communication de bonne qualité. De manière avantageuse, l'invention permet ainsi à un utilisateur de sélectionner l'une des interfaces de communication qui sera la plus adaptée à établir une communication de bonne qualité.

Selon une réalisation particulière, le procédé est tel que l'indication représentative de la charge du réseau est donnée par la couleur d'un symbole représentatif de la qualité du signal radio. Selon un mode de réalisation particulier, l'indication de charge réseau est représentée par une variation de la coloration d'une indication de la qualité du signal radio. Par exemple, la qualité d'un signal radio est classiquement représentée sur un écran sous la forme d'un certain nombre de barres. L'invention propose de colorer l'affichage de ce symbole selon un code tricolore représentatif du trafic en cours sur le réseau. Par exemple, une indication représentant une seule barre de couleur verte peut être utilisée pour signifier un faible signal radio et un réseau qui n'est pas saturé. A l'inverse, une indication représentant plusieurs barres rouges peut être utilisée pour signifier un bon signal radio et un réseau saturé. Une telle présentation combinée d'une information de qualité du signal et de charge réseau présente l'avantage d'occuper très peu de place sur l'écran d'un terminal.

Selon un mode particulier de réalisation, le procédé est tel qu'il comprend en outre, lorsque la communication est établie par l'intermédiaire d'une interface de communication, une étape d'affichage d'un élément d'interface adapté pour effectuer une bascule de la communication sur une interface de communication alternative lorsque la valeur représentative de la charge du réseau associé à l'interface alternative n'excède pas un seuil déterminé.

Lorsqu'une communication est établie et qu'un réseau d'accès alternatif est disponible, le procédé selon l'invention propose de déterminer la charge du réseau alternatif. Lorsque la charge déterminée sur ce réseau d'accès n'excède pas un seuil déterminé, un élément d'interaction est affiché sur une interface du terminal. Par exemple, un bouton est affiché ou activé sur une interface tactile du terminal. Une interaction de l'utilisateur sur cet élément d'interface provoque alors une bascule de la communication sur le réseau alternatif. De cette manière, l'utilisateur peut décider ou non de changer de réseau d'accès en cours de communication, mais uniquement lorsque les conditions sur le réseau de destination sont compatibles avec une communication de bonne qualité.

Selon un autre aspect, l'invention concerne un terminal de communication comprenant un dispositif selon la revendication 10.

Un aspect non couvert par l'invention concerne également un programme d'ordinateur comportant des instructions pour l'exécution des étapes du procédé selon la revendication 1, lorsque ledit programme est exécuté par un processeur.

Enfin, l'invention concerne un support d'informations selon la revendication 15.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé d'amélioration tels que définis ci-dessus.

Les terminaux, dispositifs, programmes et supports d'informations présentent au moins des avantages analogues à ceux conférés par les procédés auxquels ils se rapportent et décrits ci-dessus.

Selon un autre aspect, l'invention concerne un procédé selon la revendication 13 et un support d'informations selon la revendication 15 .

Le procédé selon la revendication 13 permet ainsi à un terminal connecté au réseau en amont d'un point d'accès d'obtenir une valeur représentative de la charge du réseau aval. De cette façon, lorsque le procédé de transmission est mis en œuvre par exemple sur une passerelle résidentielle connectée en aval à un réseau ADSL et en amont à un réseau Wi-Fi, un terminal connecté au réseau d'accès Wi-Fi peut obtenir une valeur représentative de la charge du réseau ADSL et la charge du réseau Wi-Fi. Le terminal peut alors sélectionner une interface réseau optimale pour établir une communication, prenant en compte les différents tronçons à emprunter pour atteindre le réseau de communication.

Selon une réalisation particulière, l'étape de transmission est réalisée par l'envoi d'un message de type DHCP comprenant une valeur représentative de la charge du réseau aval.

Ainsi, un terminal connecté au réseau amont peut obtenir une valeur représentative du trafic lors de son attachement au réseau ou suite à un renouvellement du bail DHCP ou lors d'une phase de détection d'établissement de communication ou bien encore en cours de communication.

Selon une réalisation particulière, l'étape de transmission est réalisée par l'envoi d'une notification push vers le terminal.

La plupart des systèmes d'exploitation pour terminaux mobile supportent des notifications dite « push ». Il s'agit de notifications émises par un serveur et reçues par le terminal selon différents moyens de communications. De telles notifications sont ainsi particulièrement adaptées à une transmission d'information vers les terminaux mobiles.

Selon encore un autre aspect, l'invention se rapporte à un dispositif selon la revendication 14. Un aspect non couvert par l'invention concerne aussi une passerelle réseau comprenant un dispositif selon la revendication 14.

Le dispositif selon la revendication 14 présente au moins des avantages analogues à ceux conférés par le procédé selon la revendication 13 décrit ci-dessus.

### Liste des figures

D'autres caractéristiques et avantages apparaîtront à la lecture de modes de réalisation préférés décrits en référence aux figures parmi lesquelles :
- La figure 1 illustre une architecture adaptée pour mettre en œuvre le procédé de sélection selon un mode particulier de réalisation de l'invention,
- La figure 2a illustre les principales étapes du procédé de sélection selon un mode de réalisation particulier de l'invention,
- La figure 2b illustre les principales étapes du procédé de transmission selon un mode de réalisation particulier de l'invention,
- La figure 3 représente l'architecture d'un dispositif d'un terminal de communication adapté pour la mise en œuvre du procédé de sélection selon une réalisation particulière de l'invention, et
- La figure 4 représente l'architecture d'un dispositif adapté pour la mise en œuvre du procédé de transmission selon un mode particulier de réalisation.

### Description détaillée

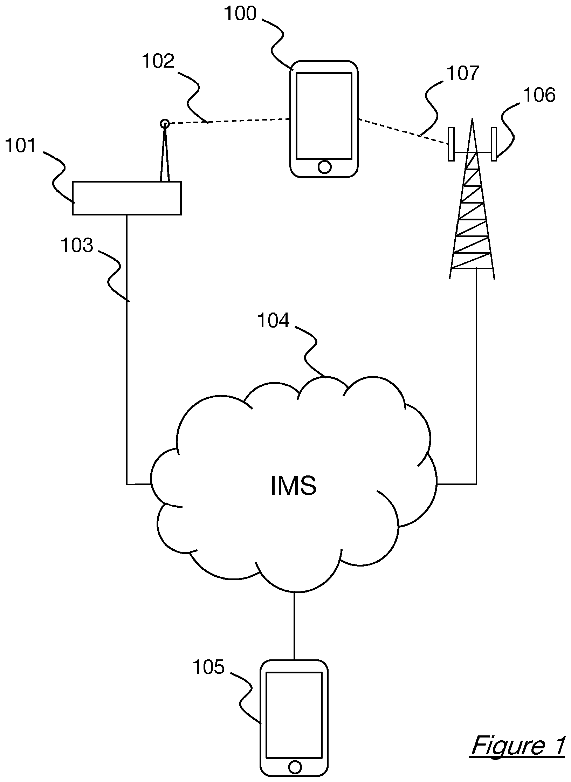

La figure 1 illustre une architecture adaptée pour mettre en œuvre le procédé de sélection selon un mode particulier de réalisation de l'invention.

La figure 1 représente un terminal 100 connecté à un point d'accès 101 par l'intermédiaire d'une liaison sans fil 102. Le terminal 100 est un terminal de communication de type Smartphone disposant d'au moins deux interfaces réseau lui permettant de se connecter de différentes manières à un réseau de communication 104.

Une première interface réseau du terminal 100 est par exemple une interface réseau Wi-Fi adaptée pour connecter le terminal au point d'accès 101. Un tel point d'accès est par exemple un modem routeur ADSL offrant une interface de communication sans fil 102 de type Wi-Fi. Le point d'accès 101 comprend également une seconde interface de communication 103, par exemple une interface de type ADSL (Asymétrie Digital Subscriber Line) vers un réseau de communication 104. Le réseau 104 est par exemple un réseau de type IMS (Internet Multimedia subsystem). Le terminal 100 peut ainsi établir une communication avec un second terminal 105 par l'intermédiaire de la connexion Wi-Fi 102, du modem-routeur 101, du réseau ADSL 103 et du réseau de communications 104. Une telle communication établie par l'intermédiaire du réseau d'accès Wi-Fi est une communication VoWiFi.

Le terminal 100 dispose également d'une seconde interface réseau. Cette interface est adaptée pour connecter le terminal au réseau de communication 104 par l'intermédiaire d'un second réseau d'accès 106. Le réseau d'accès 106 est par exemple un réseau cellulaire de type 2G, 3G ou 4G. Le terminal peut ainsi établir une communication avec le terminal 105 au travers d'une connexion 107 au réseau cellulaire 106 et du réseau de communication 104. Une telle communication est une communication VoLTE établie sur un réseau d'accès cellulaire 4G.

Ainsi, le terminal peut établir des communications avec le terminal 105 au moyen de l'une ou l'autre des interfaces réseaux dont il dispose.

La description qui va suivre est faite en référence à une communication vocale, mais l'invention s'applique de la même manière à d'autres modalités de communication, comme par exemple des communications vidéo ou de messageries instantanées. De même, bien que la présente description soit faite en référence à un réseau de communication de type IMS, l'invention ne se limite nullement à ce type de réseau et convient à différents types de réseaux et/ou protocoles de communications. Enfin, bien que la description prenne pour exemple un réseau d'accès Wi-Fi 102, l'invention s'applique à d'autres types de réseau d'accès, tels que par exemple des réseaux d'accès Ethernet, Wimax, ou Bluetooth.

De manière classique, l'interface réseau à utiliser pour établir une communication peut dépendre de préférences configurées au préalable par l'opérateur de télécommunications. Par exemple, un opérateur peut préconfigurer un terminal de façon à privilégier lorsque c'est possible les communications VoWiFi, dans le but de réduire les coûts et délester le trafic sur le réseau cellulaire. Toujours selon l'état de la technique, le choix de l'interface réseau à utiliser pour une communication peut être effectué selon une préférence de l'utilisateur, soit au moment de passer l'appel, soit par une configuration préalable du terminal au travers d'une interface de configuration adaptée. Par exemple, le terminal 100 peut comprendre des paramètres de configuration permettant d'interdire ou de forcer les communications VoWiFi, d'indiquer une préférence VoWiFi ou cellulaire lorsque des réseaux d'accès correspondants sont à portée, ou encore d'interdire ou de forcer les communications cellulaire lorsqu'un réseau est disponible. Certains terminaux sélectionnent automatiquement une interface réseau selon la qualité du signal radio. Par exemple, un terminal peut décider d'établir une communication 4G VoLTE bien qu'un réseau d'accès Wi-Fi soit disponible, lorsque le signal radio du réseau Wi-Fi est inférieur à un seuil.

Cependant, de telles techniques ne permettent pas toujours une sélection optimale de l'interface réseau. En particulier, les techniques se basant sur une mesure de la qualité d'un signal radio ne permettent pas de garantir une bonne qualité des communications sur les réseaux d'accès sans réservation de ressources, tels que les réseaux Wi-FI.

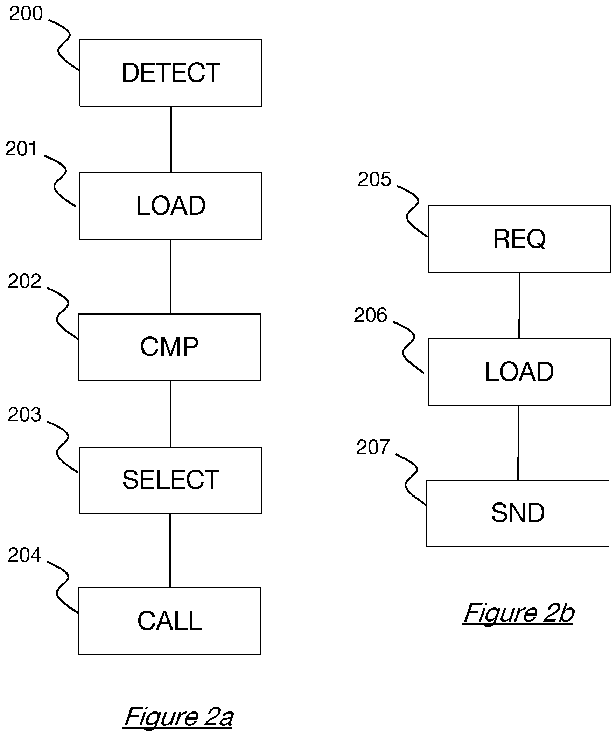

La figure 2a illustre les principales étapes du procédé de sélection automatique d'une interface de communication sur un terminal. Un tel procédé permet à un terminal de sélectionner de façon optimale un réseau d'accès au travers duquel il peut établir une communication lorsqu'une pluralité de réseaux d'accès sont disponibles. En référence à la figure 1, le procédé permet ainsi au terminal 100 de déterminer de manière fiable laquelle des connexions 102 et 107 est la plus optimale lorsqu'il s'agit d'établir une communication avec le terminal 105.

Pour cela, lors d'une étape optionnelle 200, le terminal détecte une demande d'établissement d'une communication. La demande d'établissement d'une communication découle le plus souvent d'une action de l'utilisateur consistant par exemple à saisir l'identifiant de l'appelé dans une application de communication et à demander une mise en relation par une action sur un élément d'interface utilisateur. Une telle action génère le plus souvent un évènement dans le système d'exploitation du terminal de façon à ce que différents services puissent détecter la demande d'établissement de communication et exécuter des actions en conséquence. Par exemple un historique d'appel du terminal peut s'abonner à un tel évènement système dans le but de détecter la destination, et la durée d'une communication. De façon similaire, un terminal mettant en œuvre l'invention peut détecter une demande d'établissement d'une communication.

Selon une réalisation particulière, le terminal détecte une demande d'établissement d'une communication en provenance d'un autre terminal. Par exemple, en référence à la figure 1, le terminal 105 peut envoyer une demande d'établissement de communication au terminal 100. Le terminal 100 peut alors détecter cette demande d'établissement en s'abonnant à un évènement système signalant une communication entrante.

Lorsqu'une communication est en cours, la détection revient alors à constater qu'une communication est déjà établie.

A l'étape 201, le terminal obtient une valeur représentative de la charge du premier réseau d'accès. La charge du réseau correspond ici à un rapport entre le trafic effectif sur le réseau d'accès en question et le trafic maximum théorique qu'il peut supporter. La charge du réseau est une information différente et indépendante de la qualité du signal radio.

Afin d'estimer la charge du réseau d'accès 102 et en obtenir une valeur représentative, le terminal peut, selon une réalisation particulière de l'invention, examiner le taux de collision de trames de données sur le premier réseau. En effet, plus le trafic est important sur un réseau sans fil, plus le risque de collision entre différentes trames de données augmente. La détection des collisions est généralement réalisée par les interfaces réseaux sans fil ou de type Ethernet de façon à pouvoir retransmettre les données n'ayant pu être transmises correctement suite à une collision. Ainsi, le terminal peut interroger une carte réseau au moyen d'une API (Application Programing Interface) prévue à cet effet, et obtenir en retour une valeur représentative de la charge du réseau auquel est connectée cette carte réseau.

Toutefois, certains protocoles de transmission de données mettent en œuvre des mécanismes dont le but est d'éviter les collisions. Le taux de collision n'est alors plus une valeur représentative de la charge sur un tel type de réseau. Par exemple, le protocole 802.11 met en œuvre le mécanisme DCF (Distributed Coordinated Function) afin d'éviter les collisions.

Selon une réalisation particulière, l'invention propose de déterminer la charge d'un réseau d'accès au moins à partir du taux de période sans trafic sur le premier réseau. On peut en effet constater une corrélation entre le nombre de périodes sans trafic par unité de temps et la charge effective du réseau. En particulier, selon le protocole 802.11, les terminaux connectés au point d'accès se mettent en écoute avant d'émettre des données pour éviter les collisions d'émission. Chaque terminal ou point d'accès utilise alors des périodes aléatoires pour émettre lorsqu'il n'y a pas de trafic. Le taux de période sans trafic peut être obtenu de la même manière que le taux de collision, en interrogeant un dispositif d'interface connecté au réseau tel qu'une carte réseau Wi-Fi.

Toutefois, il convient de noter qu'un taux de période sans trafic important, correspondant par exemple à une charge modérée du réseau d'accès, ne peut suffire à garantir une communication vocale de bonne qualité au travers du réseau d'accès. En effet, les communications vocales ou vidéo temps réel nécessitent un envoi régulier de paquets de données. Par exemple, une communication audio peut nécessiter l'envoi de paquets de données toutes les 20ms. Selon un mode particulier de réalisation, l'invention propose d'obtenir une valeur représentative de la répartition des périodes sans trafic sur une fenêtre temporelle prédéterminée afin de sélectionner un réseau d'accès optimal pour établir une communication. Une telle valeur peut être obtenue en examinant les occurrences, la durée et la répartition des périodes sans trafic sur une fenêtre temporelle prédéterminée. Les données permettant d'obtenir cette valeur peuvent par exemple être obtenues en interrogeant une carte d'interface au réseau d'accès par l'intermédiaire d'API prévues à cet effet. En proposant une mise en correspondance de la durée et la répartition des périodes sans trafic avec la taille et la fréquence d'émission des paquets de données, le procédé selon l'invention permet d'estimer de manière fiable la qualité d'une communication sur un réseau d'accès particulier.

Selon un mode particulier de réalisation, l'étape 201 d'obtention d'une valeur représentative de la charge du premier réseau d'accès comprend une étape d'obtention d'une valeur représentative de la charge d'un premier tronçon du réseau d'accès et une étape d'obtention de la charge d'un second tronçon du réseau d'accès. Par exemple, en référence à la figure 1, le terminal 100 peut obtenir une valeur représentative de la charge sur les tronçons 102 et 103. De cette manière, l'estimation de la qualité d'une communication établie au travers des réseaux Wi-Fi 102 et ADSL 103 est améliorée, et la sélection de l'interface réseau est optimale. Le terminal peut obtenir la charge du réseau 103 en interrogeant par exemple le modem-routeur 101 par une requête http prévue à cet effet. Selon un autre mode de réalisation particulier, le modem-routeur 101 transmet une information de charge du réseau 103 par l'intermédiaire d'un protocole adapté, comme par exemple le protocole DHCP (Dynamic Host Configuration Protocol). Le terminal peut ainsi recevoir dans un message DHCP une information sur la charge su réseau d'accès aval 103, soit lors de son attachement au point d'accès 101, soit après avoir transmis une demande de renouvellement du bail DHCP, soit lors d'une phase d'établissement de communication, soit en cours de communication. L'équipement 101 peut toutefois mettre en œuvre d'autres mécanismes afin de communiquer une information sur la charge du réseau aval 103, comme par exemple des mécanisme de notification de type « push » utilisés de manière connue pour transmettre une information de façon asynchrone à un terminal ayant souscrit à la notification.

Selon un mode particulier de réalisation, l'équipement 101 met en œuvre le procédé de transmission tel qu'il sera décrit ci-après en référence à la figure 2b.

Lors de l'étape 202, le terminal compare au moins une donnée représentative de la charge réseau avec une valeur de charge prédéterminée. Une telle comparaison vise à déterminer si les conditions réseau permettent l'établissement d'une communication de bonne qualité. Pour cela le terminal 100 compare la durée des périodes sans trafic avec la durée d'émission des paquets de données et la répartition avec la taille et la fréquence d'émission des paquets de données, le procédé selon l'invention permet d'estimer de manière fiable la qualité d'une communication établie sur un réseau d'accès particulier.

On peut noter que la durée et la répartition des périodes sans trafic peuvent être utilisées par le terminal pour déterminer un format de codage optimal et/ou une paquetisation optimale pour la communication. Par exemple, des périodes sans trafic adaptées pour émettre des trames de 20 octets toutes les 30 ms ne sont pas compatibles avec l'utilisation du codec G.711, alors qu'elles sont adaptées à l'usage du codage G.723.1.

A l'issue de la comparaison, le terminal sélectionne, à l'étape 203, une interface optimale et établit une communication à l'étape 204. La sélection de l'interface peut consister en une configuration d'un module de communication du terminal de manière à ce que la communication soit établie au travers du réseau d'accès sélectionné. Le procédé selon l'invention permet ainsi la sélection d'un réseau d'accès optimal du point de vue de la qualité de la communication.

Selon une réalisation particulière, la sélection d'un réseau d'accès optimal est réalisée alors qu'une communication est établie. Par exemple, si une communication VoLTE est établie entre le terminal 100 et le terminal 105 par l'intermédiaire du réseau d'accès 106 et que l'utilisateur se déplaçant, le terminal arrive à portée du point d'accès 101, le terminal peut décider s'il est opportun de changer automatiquement de réseau d'accès ou, selon une réalisation particulière, de proposer ce changement de réseau d'accès à l'utilisateur. Pour cela, outre les étapes du procédé de sélection exposées précédemment, le terminal peut mettre en œuvre une étape d'estimation de la qualité de la communication déjà établie. Ainsi, la décision de changement de réseau d'accès se base non seulement sur les caractéristiques du trafic sur le réseau d'accès cible, mais aussi sur la qualité de la communication en cours au travers du premier réseau d'accès. Le terminal peut déterminer une valeur représentative de la qualité de la communication établie à partir de données de communication reçues. Par exemple, le terminal peut détecter des phénomènes caractéristiques de mauvaises conditions réseau tels que la gigue, le retard ou la perte d'un certain nombre de paquets de données. Ces données peuvent par exemple être obtenues en observant les numéros de séquence de paquets de données ou le nombre d'échantillons manquants lors du décodage des données reçues. Le terminal peut alors décider de basculer sur un autre réseau d'accès si la valeur représentative de la qualité de la communication ainsi déterminée n'excède pas un seuil correspondant à une communication de mauvaise qualité, par exemple si le taux de pertes de paquets est supérieur à 2%, ce taux dépendant du codage mis en œuvre pour la communication.

La bascule sur le réseau cible peut être effectuée automatiquement lorsque la qualité de la communication établie est mauvaise et que la valeur représentative de la charge du réseau cible promet une communication de bonne qualité.

Afin d'optimiser encore le choix d'un réseau d'accès, le terminal prend en compte selon un mode de réalisation particulier une valeur représentative de la qualité du signal radio émis par un point d'accès auquel est connectée ladite interface. De manière classique, une telle valeur correspond à la puissance du signal reçu par le terminal. Une telle valeur décroît à mesure que le terminal s'éloigne du point d'accès. Un signal faible peut provoquer des erreurs de transmissions et nuire à la qualité de la communication. Le terminal 100 peut alors interroger l'interface au réseau d'accès 102 au moyen d'une API adaptée pour obtenir la puissance du signal et déterminer, à l'aide de la valeur représentative de la charge de ce même réseau 102, et décider ou non d'utiliser le réseau d'accès 102 pour établir la communication.

De manière classique, la puissance du signal radio est indiquée par un symbole sur l'écran des terminaux de télécommunication tels que le terminal 100. Un tel symbole est généralement constitué par un ensemble de « barres » dont le nombre est proportionnel à la puissance du signal reçu. Les terminaux affichent un tel symbole pour permettre à l'utilisateur d'évaluer à priori la possibilité d'établir une communication de qualité. Mais, comme expliqué précédemment, si une indication de puissance du signal reste nécessaire pour que l'utilisateur sache qu'il est ou non à portée d'un réseau, elle n'est pas suffisante pour déterminer s'il est possible d'établir une communication de qualité et sélectionner un réseau d'accès en conséquence. Par ailleurs, l'écran d'un terminal mobile est de taille limité et l'ajout d'un symbole supplémentaire pour communiquer à l'utilisateur une valeur représentative de la charge d'un réseau d'accès pose un problème. L'invention apporte une solution en proposant une colorisation du symbole de signal radio selon la valeur représentative de la charge obtenue selon le procédé décrit en référence à la figure 1. Par exemple, lorsque l'indicateur de signal radio est de couleur rouge et comprend toutes les barres, l'utilisateur est averti que le signal est bon mais que le trafic sur le réseau n'autorise pas des communications de bonne qualité. A l'inverse, un symbole de couleur verte donne une indication selon laquelle le trafic sur le réseau d'accès n'interdit pas une communication de bonne qualité. Différentes couleurs intermédiaires telles que le jaune ou l'orange peuvent bien entendu être utilisées afin de dénoter des niveaux de qualité intermédiaires. L'invention permet ainsi de résoudre le problème technique de l'affichage d'une information supplémentaire sur un écran de taille limité et facilite l'expérience client qui n'a pas à corréler lui-même les significations de plusieurs symboles.

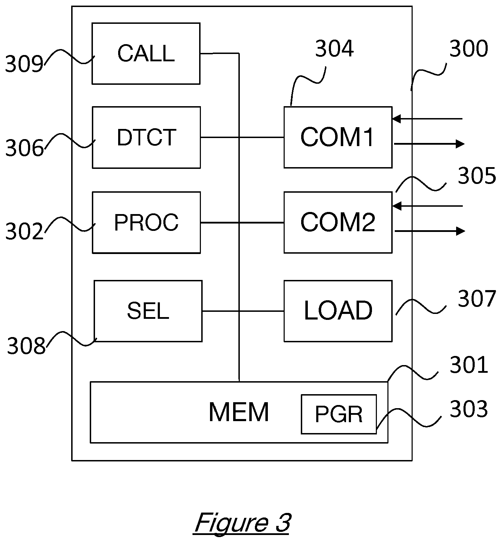

La figure 3 illustre l'architecture d'un dispositif 300 d'un terminal de communication adapté pour mettre en œuvre le procédé de sélection selon un mode particulier de réalisation.

Le dispositif comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en œuvre le procédé de sélection tel que décrit dans l'invention en référence à la figure 2a, et notamment les étapes d'obtention d'une valeur représentative de la charge du premier réseau d'accès, de sélection de la première interface lorsque la valeur obtenue n'excède pas un seuil et d'établissement d'une communication par l'intermédiaire de l'interface sélectionnée.

À l'initialisation, les instructions du programme d'ordinateur 303 sont par exemple chargées dans une mémoire RAM (Random Access Memory) avant d'être exécutées par le processeur de l'unité de traitement 302. Le processeur de l'unité de traitement 302 met en œuvre les étapes du procédé de sélection selon les instructions du programme d'ordinateur 303.

Pour cela, le dispositif comprend, outre la mémoire 301, un module de communication 304 tel qu'une interface réseau sans fil COM1 permettant de se connecter et d'échanger des données par l'intermédiaire d'un réseau d'accès de type WiFi. L'interface de communication 304 permet l'établissement de communications avec un autre terminal et l'échange de messages ainsi que de paquets de données de communication. L'interface COM1 est en outre configurée pour obtenir des informations sur les caractéristiques du trafic sur le réseau d'accès auquel elle est connectée, et en particulier pour déterminer au moins un taux de collision des trames de données, un taux de période sans trafic ou une répartition des périodes sans trafic. Selon une réalisation particulière, le module de communication 304 permet de recevoir un message DHCP ou une notification « push » comprenant une donnée représentative du trafic sur un tronçon d'un réseau aval.

Le dispositif comprend également une interface de communication 305, comme par exemple une interface réseau cellulaire adaptée pour établir des communications au travers d'un réseau d'accès cellulaire de type 2G, 3G ou 4G.

Le dispositif comporte en outre, de manière optionnelle, un module 306 de détection d'une demande d'établissement d'une communication. Le module 306 peut être un module logiciel ou matériel adapté pour obtenir une information du système du terminal selon laquelle une communication est sur le point d'être établie. Pour cela, le module peut s'abonner, par l'intermédiaire d'une API, à des événements systèmes relatifs à l'établissement de communications de manière à être notifié lorsqu'une communication est sur le point d'être établie. De cette manière, le module 306 peut détecter une demande d'établissement d'une communication.

Le dispositif comprend également un module 307 d'obtention d'une valeur représentative de la charge d'un réseau d'accès. Le module 307 peut être réalisé sous la forme d'un programme d'ordinateur chargé dans la mémoire 301 et exécuté par le processeur 302. Un tel programme comprend des instructions pour interroger une interface réseau du terminal afin d'obtenir en retour au moins une valeur caractéristique de la charge du réseau d'accès. Le dispositif 300 comprend aussi un module 308 de sélection d'une interface lorsque la valeur obtenue n'excède pas un seuil prédéterminé. Le module 308 peut être réalisé sous la forme d'un programme d'ordinateur chargé dans la mémoire 301 et exécuté par le processeur 302. Un tel programme d'ordinateur comprend des instructions configurées pour comparer une valeur représentative de la charge d'un réseau d'accès obtenue par le module 307 et, pour sélectionner le réseau d'accès lorsque le résultat de la comparaison excède un seuil prédéterminé.

Le dispositif 300 comporte enfin un module 309 d'établissement d'une communication par l'intermédiaire de l'interface sélectionnée. Un tel module correspond selon un mode particulier de réalisation à un circuit ou un programme d'ordinateur comprenant des instructions configurées pour mettre en œuvre, lorsqu'elles sont exécutées par le processeur 302, l'établissement d'une communication avec un correspondant.

Dans l'invention, un tel dispositif de sélection est intégré dans un terminal de télécommunication tel qu'un téléphone mobile, une montre connectée, une tablette ou encore un ordinateur personnel.

La figure 2b illustre les principales étapes du procédé de transmission selon l'invention. Un tel procédé peut avantageusement être mis en œuvre sur un point d'accès tel que le point d'accès 101 représenté sur la figure 1.

Lors d'une première étape optionnelle 205, le point d'accès 101 reçoit une demande en provenance du terminal 100, la demande comprenant une indication selon laquelle une valeur représentative de la charge du réseau 103 est demandée. Une telle disposition peut être mise en œuvre par exemple au moyen d'une requête de type http émise par le terminal 100 à destination d'un serveur http intégré au point d'accès 101.

A l'étape 206, le point d'accès 101 obtient une valeur représentative de la charge du réseau ADSL 103. L'obtention de cette valeur peut être réalisée selon les mêmes dispositions qu'à l'étape 201. Selon une réalisation particulière, la valeur est obtenue dans le cas d'un réseau d'accès ADSL en comparant la valeur du débit de synchronisation du point d'accès 101 avec le réseau d'accès 103 obtenu lors de la procédure de démarrage ou de re-synchronisation du point d'accès 101, avec l'ensemble des trafics montants et descendants effectivement échangés ou mesurés sur le réseau d'accès 103. La mesure de charge du réseau d'accès 103 peut aussi selon l'ingénierie utilisée prendre en compte le cas où plusieurs canaux logiques avec des qualités de services distinctes sont utilisés pour les différents services (par exemple un canal logique pour les flux de VoIP (Voice Over Internet Protocol) avec une qualité de service associée, un canal logique pour les flux TV et/ou VOD avec une qualité de service associée, un canal logique pour le flux Internet avec une qualité de service « Best Effort », sachant que dans ce cas le terminal 100 utilisera le canal logique Internet.

A l'étape 207, le point d'accès 101 transmet la valeur obtenue au terminal 100. La valeur peut par exemple être transmise dans la réponse à la requête http reçue à l'étape 205. Selon un mode particulier de réalisation, la valeur obtenue est transmise aux terminaux connectés au réseau d'accès 102 par l'intermédiaire d'un message conforme au protocole DHCP dans lequel la valeur est renseignée dans une nouvelle option DHCP dédiée à cet effet. Selon une réalisation particulière de l'invention, la valeur est transmise au moyen d'une notification « push » aux terminaux qui sont abonnés à la réception d'une telle notification, le point d'accès 101 intégrant un serveur de notifications push pouvant lui-même être connecté via le réseau Internet aux serveurs de notifications push des différents fournisseurs de terminaux (par exemple serveur de push « Apple Push Notification Server » d'Apple^{™} ou « Cloud 2 Messaging » de Google^{™}) ou bien en envoyant lui-même directement les notifications push vers les terminaux, par exemple en technologie WebSocket.

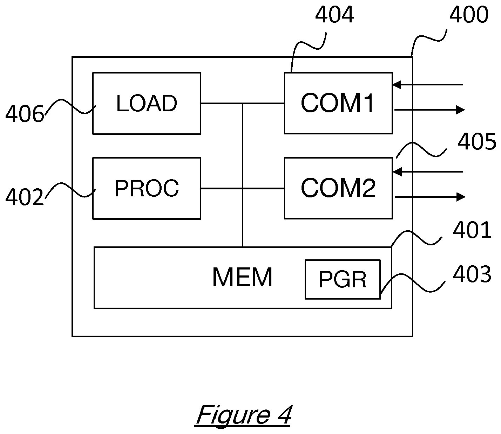

La figure 4 représente l'architecture d'un dispositif 400 adapté pour mettre en œuvre le procédé de transmission selon un mode particulier de réalisation.

Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé de transmission tel que décrit dans l'invention en référence à la figure 2b, et notamment les étapes d'obtention d'une valeur représentative de la charge du réseau aval, et de transmission de la valeur obtenue vers un terminal connecté au réseau amont, le terminal étant adapté pour sélectionner automatiquement une interface de communication pour l'établissement d'une communication au moins à partir de la valeur représentative de la charge du réseau aval obtenue.

À l'initialisation, les instructions du programme d'ordinateur 403 sont par exemple chargées dans une mémoire RAM (Random Access Memory) avant d'être exécutées par le processeur de l'unité de traitement 402. Le processeur de l'unité de traitement 402 met en œuvre les étapes du procédé de transmission selon les instructions du programme d'ordinateur 403.

Pour cela, le dispositif comporte une interface 404 vers un réseau en aval du dispositif. L'interface 404 peut être un module de communication tel qu'une interface réseau de type ADSL adaptée pour échanger des données avec d'autres équipements. L'interface 404 est en outre configurée pour obtenir des informations sur les caractéristiques du trafic sur le réseau d'accès auquel elle est connectée, et en particulier pour déterminer au moins un taux de collision des trames de données si des collisions peuvent se produire sur le type de réseau envisagé, un taux de période sans trafic ou une répartition des périodes sans trafic.

Le dispositif comporte également une interface réseau 405. L'interface 405 est par exemple une interface à un réseau amont. Ce réseau amont est par exemple un réseau d'accès de type Wi-FI et l'interface 405 est configurée pour jouer un rôle de point d'accès Wi-Fi. L'interface 405 est également adaptée pour échanger des messages avec d'autres dispositifs connectés au réseau amont, et en particulier pour recevoir des demandes d'obtention d'une valeur représentative de la charge du réseau aval. Le module 405 est en outre adapté pour transmettre la valeur obtenue vers un terminal connecté au réseau amont, le terminal étant adapté pour sélectionner automatiquement une interface de communication pour l'établissement d'une communication au moins à partir de la valeur représentative de la charge du réseau aval obtenue.

Le dispositif comprend enfin un module 406 d'obtention d'une valeur représentative de la charge du réseau aval. Un tel module a des caractéristiques et des avantages similaires au module 307 décrit en référence à la figure 3.

Selon une réalisation particulière, le dispositif peut comprendre un serveur DHCP adapté pour transmettre une valeur représentative de la charge du réseau aval vers les terminaux connectés au réseau amont.

Selon une réalisation particulière, le dispositif peut comprendre un serveur de notifications push adapté pour transmettre une valeur représentative de la charge du réseau aval vers les terminaux connectés au réseau amont.

Le dispositif de transmission peut avantageusement être intégré dans un point d'accès Wi-Fi, un modem-routeur, ou une passerelle domestique.

## Revendications

1. Procédé mis en œuvre par un terminal de communication comprenant au moins une première interface de communication sans fil connectée à un premier réseau d'accès par l'intermédiaire d'un point d'accès (101) et une seconde interface de communication sans fil connectée à un second réseau d'accès, ledit procédé comprenant une sélection automatique d'une interface de communication dudit terminal à utiliser pour une communication dudit terminal, ladite sélection automatique comprenant une sélection (203) de la première interface en fonction d'une valeur représentative d'une charge du premier réseau d'accès, le procédé étant **caractérisé en ce qu'**il comprend :
- une détermination de ladite valeur représentative de la charge du premier réseau d'accès, comprenant :
∘ une obtention d'une valeur représentative d'une charge d'un premier tronçon du premier réseau d'accès, ledit premier tronçon étant situé en amont dudit point d'accès, entre ledit terminal et ledit point d'accès,
∘ une émission vers ledit point d'accès d'une demande de transmission d'une indication de la charge d'un second tronçon du premier réseau d'accès, ledit second tronçon étant situé en aval dudit point d'accès ;et
∘ une réception d'une valeur représentative de la charge dudit second tronçon en réponse à la demande.

2. Procédé selon la revendication 1 **caractérisé en ce qu'**il comporte en outre, lorsque la communication est établie par l'intermédiaire de la première interface de communication, les étapes suivantes :
- détermination d'une valeur représentative de la qualité de la communication à partir des données de communication reçues, et
- bascule de la communication sur la seconde interface de communication selon la valeur représentative de la charge du premier réseau d'accès déterminée et la valeur représentative de la qualité de la communication.

3. Procédé selon l'une quelconque des revendications 1 ou 2 **caractérisé en ce que** la valeur représentative de la charge du premier réseau d'accès est déterminée en outre au moins à partir d'un taux de périodes sans trafic mesuré sur ledit premier réseau d'accès.

4. Procédé selon la revendication 3 **caractérisé en ce que** la valeur représentative de la charge du premier réseau d'accès est déterminée en outre au moins à partir d'une répartition desdites périodes sans trafic sur une fenêtre temporelle.

5. Procédé selon l'une quelconque des revendications précédentes **caractérisé en ce que** la valeur représentative de la charge du premier réseau d'accès est déterminée en outre au moins à partir du taux de collision des trames de données échangées sur le premier réseau d'accès.

6. Procédé selon d'une quelconque des revendications précédentes **caractérisé en ce que** la sélection automatique tient compte en outre d'une valeur représentative de la qualité du signal radio émis par le point d'accès auquel est connectée ladite première interface.

7. Procédé selon l'une quelconque des revendications précédentes **caractérisé en ce que** le premier réseau d'accès est un réseau de type Wifi et le second réseau d'accès est un réseau cellulaire.

8. Procédé selon l'une quelconque des revendications précédentes **caractérisé en ce qu'**il comporte un affichage d'une indication représentative de la charge dudit premier réseau d'accès sur un écran dudit terminal.

9. Procédé selon l'une quelconque des revendications précédentes **caractérisé en ce qu'**il comprend en outre, lorsque la communication est établie par l'intermédiaire d'une interface de communication à un réseau d'accès, un affichage d'un élément d'interface adapté pour effectuer une bascule de la communication sur une interface de communication alternative, lorsque la valeur représentative de la charge du réseau associé à ladite interface de communication alternative n'excède pas un seuil.

10. Terminal de communication (100) comprenant au moins une première interface de communication sans fil (304) connectée à un premier réseau d'accès par l'intermédiaire d'un point d'accès (101) et une seconde interface de communication sans fil (305) connectée à un second réseau d'accès, ledit terminal comprenant un dispositif de sélection automatique d'une interface de communication dudit terminal à utiliser pour une communication dudit terminal, ladite sélection automatique comprenant une sélection (203) de la première interface en fonction d'une valeur représentative d'une charge du premier réseau d'accès, le dispositif de sélection étant **caractérisé en ce qu'**il comprend :
- un module d'émission vers ledit point d'accès d'une demande de transmission d'une indication de la charge d'un second tronçon du premier réseau d'accès, ledit second tronçon étant situé en aval dudit point d'accès ;
- un module (307) de détermination de ladite valeur représentative de la charge du premier réseau d'accès, apte à obtenir une valeur représentative d'une charge d'un premier tronçon du premier réseau d'accès, ledit premier tronçon étant situé en amont dudit point d'accès, entre ledit terminal de télécommunication (100) et ledit point d'accès, et à recevoir une valeur représentative de la charge dudit second tronçon du premier réseau d'accès, en réponse à la demande

11. Terminal de communication selon la revendication 10 **caractérisé en ce que** ledit dispositif de sélection comporte en outre:
- Un module de détermination, lorsque la communication est établie par l'intermédiaire de ladite première interface de communication, d'une valeur représentative de la qualité de la communication à partir des données de communication reçues et
- Un module de bascule de la communication sur ladite seconde interface de communication selon la valeur représentative de la charge du premier réseau d'accès déterminée et la valeur représentative de la qualité de la communication.

12. Terminal de communication selon la revendication 10 ou 11 **caractérisé en ce que** le terminal est adapté pour déterminer la valeur représentative de la charge du premier réseau d'accès en outre au moins à partir d'un taux de périodes sans trafic mesuré sur ledit premier réseau d'accès.

13. Procédé, mis en œuvre par un point d'accès à un premier réseau d'accès comportant au moins une première interface de communication sans fil vers un premier tronçon du premier réseau d'accès, ledit premier tronçon étant situé en amont dudit point d'accès, entre un terminal de télécommunication (100) et ledit point d'accès et une seconde interface de communication vers un second tronçon du premier réseau d'accès, ledit second tronçon étant situé en aval du point d'accès, le procédé étant **caractérisé en ce qu'**il comporte:
- une réception (205) d'une demande de transmission d'une indication de la charge dudit second tronçon du premier réseau d'accès émise par ledit terminal de communication;
- une obtention (206) d'une valeur représentative d'une charge dudit second tronçon du premier réseau d'accès,
- une transmission (207) de la valeur obtenue vers ledit terminal de télécommunication en réponse à la demande.

14. Dispositif de point d'accès à un premier réseau d'accès (102) comprenant au moins une première interface (404) de communication sans fil vers un premier tronçon du premier réseau d'accès, ledit premier tronçon étant situé en amont dudit point d'accès, entre un terminal de télécommunication (100) et ledit dispositif et une seconde interface (405) de communication vers un second tronçon du premier réseau d'accès, ledit second tronçon étant situé en aval dudit dispositif, ledit dispositif étant **caractérisé en ce qu'**il comprend :
- un module de réception d'une demande de transmission d'une indication de la charge dudit second tronçon du premier réseau d'accès émise par ledit terminal de communication;
- un module (406) d'obtention d'une valeur représentative d'une charge du réseau dudit second tronçon du premier réseau d'accès,
- un module (405) de communication adapté pour une transmission via ladite première interface vers ledit terminal de télécommunication, de ladite valeur en réponse à la demande.

15. Support d'informations lisible par un processeur sur lequel est enregistré un programme d'ordinateur comprenant des instructions qui, lorsque celles-ci sont exécutées par un processeur d'un terminal de communication ou, respectivement, un processeur d'un dispositif de point d'accès, permettent audit terminal de communication d'exécuter les étapes du procédé selon l'une quelconque des revendications 1 à 9 ou, respectivement, permettent audit dispositif de point d'accès d'exécuter les étapes du procédé selon la revendication 13.

## Patentansprüche

1. Verfahren, das von einem Kommunikationsendgerät umgesetzt wird, das mindestens eine erste drahtlose Kommunikationsschnittstelle, die über einen Zugangspunkt (101) mit einem ersten Zugangsnetz verbunden ist, und eine zweite drahtlose Kommunikationsschnittstelle, die mit einem zweiten Zugangsnetz verbunden ist, beinhaltet, wobei das Verfahren ein automatisches Auswählen einer Kommunikationsschnittstelle des Endgeräts, die für eine Kommunikation des Endgeräts zu verwenden ist, beinhaltet, wobei das automatische Auswählen ein Auswählen (203) der ersten Schnittstelle in Abhängigkeit von einem Wert, der für eine Belastung des ersten Zugangsnetzes repräsentativ ist, beinhaltet, wobei das Verfahren **dadurch gekennzeichnet ist, dass** es Folgendes beinhaltet:
- Bestimmen des Werts, der für die Belastung des ersten Zugangsnetzes repräsentativ ist, beinhaltend:
o Erhalten eines Werts, der für eine Belastung eines ersten Abschnitts der ersten Zugangsnetzes repräsentativ ist, wobei sich der erste Abschnitt stromaufwärts des Zugangspunkts zwischen dem Endgerät und dem Zugangspunkt befindet,
o Senden, an den Zugangspunkt, einer Anfrage nach Übertragung einer Angabe der Belastung eines zweiten Abschnitts des ersten Zugangsnetzes, wobei sich der zweite Abschnitt stromabwärts des Zugangspunkts befindet; und
o Empfangen eines Werts, der für die Belastung des zweiten Abschnitts repräsentativ ist, als Reaktion auf die Anfrage.

2. Verfahren nach Anspruch 1, **dadurch gekennzeichnet, dass** es ferner, wenn die Kommunikation über die erste Kommunikationsschnittstelle hergestellt wird, die folgenden Schritte umfasst:
- Bestimmen eines Werts, der für die Qualität der Kommunikation repräsentativ ist, anhand der empfangenen Kommunikationsdaten und
- Umschalten der Kommunikation auf die zweite Kommunikationsschnittstelle gemäß dem bestimmten Wert, der für die Belastung des ersten Zugangsnetzes repräsentativ ist, und dem Wert, der für die Qualität der Kommunikation repräsentativ ist.

3. Verfahren nach einem der Ansprüche 1 oder 2, **dadurch gekennzeichnet, dass** der Wert, der für die Belastung des ersten Zugangsnetzes repräsentativ ist, ferner mindestens anhand eines Prozentsatzes von Perioden ohne Verkehr, der in dem ersten Zugangsnetz gemessen wird, bestimmt wird.

4. Verfahren nach Anspruch 3, **dadurch gekennzeichnet, dass** der Wert, der für die Belastung des ersten Zugangsnetzes repräsentativ ist, ferner mindestens anhand einer Verteilung der Perioden ohne Verkehr innerhalb eines Zeitfensters bestimmt wird.

5. Verfahren nach einem der vorhergehenden Ansprüche, **dadurch gekennzeichnet, dass** der Wert, der für die Belastung des ersten Zugangsnetzes repräsentativ ist, ferner mindestens anhand des Prozentsatzes an Kollisionen der in dem ersten Zugangsnetz ausgetauschten Datenrahmen bestimmt wird.

6. Verfahren nach einem der vorhergehenden Ansprüche, **dadurch gekennzeichnet, dass** das automatische Auswählen ferner einen Wert berücksichtigt, der für die Qualität des Funksignals repräsentativ ist, das von dem Zugangspunkt, mit dem die erste Schnittstelle verbunden ist, gesendet wird.

7. Verfahren nach einem der vorhergehenden Ansprüche, **dadurch gekennzeichnet, dass** das erste Zugangsnetz ein Netz vom Typ WiFi ist und das zweite Zugangsnetz ein Mobilfunknetz ist.

8. Verfahren nach einem der vorhergehenden Ansprüche, **dadurch gekennzeichnet, dass** es ein Anzeigen einer Angabe, die für die Belastung des ersten Zugangsnetzes repräsentativ ist, auf einem Bildschirm des Endgeräts umfasst.

9. Verfahren nach einem der vorhergehenden Ansprüche, **dadurch gekennzeichnet, dass** es ferner, wenn die Kommunikation mit einem Zugangsnetz über eine Kommunikationsschnittstelle hergestellt wird, ein Anzeigen eines Schnittstellenelements beinhaltet, das dazu angepasst ist, ein Umschalten der Kommunikation auf eine alternative Kommunikationsschnittstelle durchzuführen, wenn der Wert, der für die Belastung des mit der alternativen Kommunikationsschnittstelle assoziierten Netzes repräsentativ ist, einen Schwellenwert nicht überschreitet.

10. Kommunikationsendgerät (100), das mindestens eine erste drahtlose Kommunikationsschnittstelle (304), die über einen Zugangspunkt (101) mit einem ersten Zugangsnetz verbunden ist, und eine zweite drahtlose Kommunikationsschnittstelle (305), die mit einem zweiten Zugangsnetz verbunden ist, beinhaltet, wobei das Endgerät eine Vorrichtung zum automatischen Auswählen einer Kommunikationsschnittstelle des Endgeräts, die für eine Kommunikation des Endgeräts zu verwenden ist, beinhaltet, wobei das automatische Auswählen ein Auswählen (203) der ersten Schnittstelle in Abhängigkeit von einem Wert, der für eine Belastung des ersten Zugangsnetzes repräsentativ ist, beinhaltet, wobei die Vorrichtung zum Auswählen **dadurch gekennzeichnet ist, dass** sie Folgendes beinhaltet:
- ein Modul zum Senden, an den Zugangspunkt, einer Anfrage nach Übertragung einer Angabe der Belastung eines zweiten Abschnitts des ersten Zugangsnetzes, wobei sich der zweite Abschnitt stromabwärts des Zugangspunkts befindet;
- ein Modul (307) zum Bestimmen des Werts, der für die Belastung des ersten Zugangsnetzes repräsentativ ist, das dazu fähig ist, einen Wert, der für eine Belastung eines ersten Abschnitts des ersten Zugangsnetzes repräsentativ ist, zu erhalten, wobei sich der erste Abschnitt stromaufwärts des Zugangspunkts zwischen dem Telekommunikationsendgerät (100) und dem Zugangspunkt befindet, und einen Wert, der für die Belastung des zweiten Abschnitts des ersten Zugangsnetzes repräsentativ ist, als Reaktion auf die Anfrage zu empfangen.

11. Kommunikationsendgerät nach Anspruch 10, **dadurch gekennzeichnet, dass** die Vorrichtung zum Auswählen ferner Folgendes umfasst:
- ein Modul zum Bestimmen, wenn die Kommunikation über die erste Kommunikationsschnittstelle hergestellt wird, eines Werts, der für die Qualität der Kommunikation repräsentativ ist, anhand der empfangenen Kommunikationsdaten und
- ein Modul zum Umschalten der Kommunikation auf die zweite Kommunikationsschnittstelle gemäß dem bestimmten Wert, der für die Belastung des ersten Zugangsnetzes repräsentativ ist, und dem Wert, der für die Qualität der Kommunikation repräsentativ ist.

12. Kommunikationsendgerät nach Anspruch 10 oder 11, **dadurch gekennzeichnet, dass** das Endgerät dazu angepasst ist, den Wert, der für die Belastung des ersten Zugangsnetzes repräsentativ ist, ferner mindestens anhand eines Prozentsatzes von Perioden ohne Verkehr, der in dem ersten Zugangsnetz gemessen wird, zu bestimmen.

13. Verfahren, das von einem Zugangspunkt zu einem ersten Zugangsnetz umgesetzt wird, der mindestens eine erste drahtlose Kommunikationsschnittstelle zu einem ersten Abschnitt der ersten Zugangsnetzes, wobei sich der erste Abschnitt stromaufwärts des Zugangspunkts zwischen einem Telekommunikationsendgerät (100) und dem Zugangspunkt befindet, und eine zweite Kommunikationsschnittstelle zu einem zweiten Abschnitt des ersten Zugangsnetzes, wobei sich der zweite Abschnitt stromabwärts des Zugangspunkts befindet, umfasst, wobei das Verfahren **dadurch gekennzeichnet ist, dass** es Folgendes umfasst:
- Empfangen (205) einer Anfrage nach Übertragung einer Angabe der Belastung des zweiten Abschnitts des ersten Zugangsnetzes, die von dem Kommunikationsendgerät gesendet wird;
- Erhalten (206) eines Werts, der für eine Belastung des zweiten Abschnitts des ersten Zugangsnetzes repräsentativ ist,
- Übertragen (207) des erhaltenen Werts an das Telekommunikationsendgerät als Reaktion auf die Anfrage.

14. Vorrichtung eines Zugangspunkts zu einem ersten Zugangsnetz (102), die mindestens eine erste drahtlose Kommunikationsschnittstelle (404) zu einem ersten Abschnitt des ersten Zugangsnetzes, wobei sich der erste Abschnitt stromaufwärts des Zugangspunkts zwischen einem Telekommunikationsendgerät (100) und der Vorrichtung befindet, und eine zweite Kommunikationsschnittstelle (405) zu einem zweiten Abschnitt des ersten Zugangsnetzes, wobei sich der zweite Abschnitt stromabwärts der Vorrichtung befindet, beinhaltet, wobei die Vorrichtung **dadurch gekennzeichnet ist, dass** sie Folgendes beinhaltet:
- ein Modul zum Empfangen einer Anfrage nach Übertragung einer Angabe der Belastung des zweiten Abschnitts des ersten Zugangsnetzes, die von dem Kommunikationsendgerät gesendet wird;
- ein Modul (406) zum Erhalten eines Werts, der für eine Belastung des Netzes des zweiten Abschnitts des ersten Zugangsnetzes repräsentativ ist,
- ein Kommunikationsmodul (405), das dazu angepasst ist, den Wert als Reaktion auf die Anfrage über die erste Schnittstelle an das Telekommunikationsendgerät zu übertragen.

15. Durch einen Prozessor lesbarer Informationsträger, auf dem ein Computerprogramm aufgezeichnet ist, das Anweisungen beinhaltet, die es, wenn sie durch einen Prozessor eines Kommunikationsendgeräts bzw. durch einen Prozessor einer Zugangspunktvorrichtung ausgeführt werden, dem Kommunikationsendgerät gestatten, die Schritte des Verfahrens nach einem der Ansprüche 1 bis 9 auszuführen, bzw. der Zugangspunktvorrichtung gestatten, die Schritte des Verfahrens nach Anspruch 13 auszuführen.

## Claims

1. Method implemented by a communication terminal comprising at least one first wireless communication interface that is connected to a first access network by way of an access point (101) and one second wireless communication interface that is connected to a second access network, said method comprising an automatic selection of a communication interface of said terminal to be used for a communication of said terminal, said automatic selection comprising selecting (203) the first interface depending on a value representative of a load on the first access network, the method being **characterized in that** it comprises:
- determining said value representative of the load on the first access network, this comprising:
∘ obtaining a value representative of a load on a first leg of the first access network, said first leg being located upstream of said access point, between said terminal and said access point;
∘ sending to said access point a request to transmit an indication of the load on a second leg of the first access network, said second leg being located downstream of said access point; and
∘ receiving a value representative of the load on said second leg in response to the request.

2. Method according to Claim 1, **characterized in that** it furthermore includes, once the communication has been established by way of the first communication interface, the following steps:
- determining a value representative of the quality of the communication on the basis of the received communication data, and
- depending on the determined value representative of the load on the first access network and on the value representative of the quality of the communication, switching the communication to the second communication interface.

3. Method according to either one of Claims 1 and 2, **characterized in that** the value representative of the load on the first access network is furthermore determined at least on the basis of a density of idle periods that is measured for said first access network.

4. Method according to Claim 3, **characterized in that** the value representative of the load on the first access network is furthermore determined at least on the basis of a distribution of said idle periods in a time window.

5. Method according to any one of the preceding claims, **characterized in that** the value representative of the load on the first access network is furthermore determined at least on the basis of the collision rate of the data frames exchanged over the first access network.

6. Method according to any one of the preceding claims, **characterized in that** the automatic selection furthermore takes into account a value representative of the quality of the radio signal emitted by the access point to which said first interface is connected.

7. Method according to any one of the preceding claims, **characterized in that** the first access network is a Wi-Fi network and the second access network is a cellular network.

8. Method according to any one of the preceding claims, **characterized in that** it includes a step of displaying an indication representative of the load on said first access network on a screen of said terminal.

9. Method according to any one of the preceding claims, **characterized in that** it furthermore comprises, once the communication has been established by way of a communication interface with an access network, a step of displaying an interface element suitable for performing a switch of the communication to an alternative communication interface when the value representative of the load on the network associated with said alternative communication interface is not above a threshold.

10. Communication terminal (100) comprising at least one first wireless communication interface (304) that is connected to a first access network by way of an access point (101) and one second wireless communication interface (305) that is connected to a second access network, said terminal comprising a selecting device for automatic selection of a communication interface of said terminal to be used for a communication of said terminal, said automatic selection comprising selecting (203) the first interface depending on a value representative of a load on the first access network, the selecting device being **characterized in that** it comprises:
- a module for sending to said access point a request to transmit an indication of the load on a second leg of the first access network, said second leg being located downstream of said access point;
- a module (307) for determining said value representative of the load on the first access network, able to obtain a value representative of a load on a first leg of the first access network, said first leg being located upstream of said access point, between said telecommunication terminal (100) and said access point, and to receive a value representative of the load on said second leg of the first access network, in response to the request.

11. Communication terminal according to Claim 10, **characterized in that** said selecting device furthermore comprises:
- a module for determining, once the communication has been established by way of said first communication interface, a value representative of the quality of the communication on the basis of the received communication data, and
- depending on the determined value representative of the load on the first access network and on the value representative of the quality of the communication, a module for switching the communication to said second communication interface.

12. Communication terminal according to Claim 10 or 11, **characterized in that** the terminal is suitable for determining the value representative of the load on the first access network furthermore at least on the basis of a density of idle periods that is measured for said first access network.

13. Method, implemented by a point of access to a first access network comprising at least one first wireless communication interface with a first leg of the first access network, said first leg being located upstream of said access point, between a telecommunication terminal (100) and said access point, and a second communication interface with a second leg of the first access network, said second leg being located downstream of the access point, the method being **characterized in that** it comprises:
- receiving (205) a request to transmit an indication of the load on said second leg of the first access network, said request being sent by said communication terminal;
- obtaining (206) a value representative of a load on said second leg of the first access network;
- transmitting (207) the obtained value to said telecommunication terminal in response to the request.

14. Access-point device for a point of access to a first access network (102), said device comprising at least one first wireless communication interface (404) with a first leg of the first access network, said first leg being located upstream of said access point, between a telecommunication terminal (100) and said device, and one second communication interface (405) with a second leg of the first access network, said second leg being located downstream of said device, said device being **characterized in that** it comprises:
- a module for receiving a request to transmit an indication of the load on said second leg of the first access network, said request being sent by said communication terminal;
- a module (406) for obtaining a value representative of a network load on said second leg of the first access network;
- a communication module (405) suitable for transmitting, via said first interface, to said telecommunication terminal, said value, in response to the request.

15. Processor-readable data medium on which is stored a computer program comprising instructions that, when they are executed by a processor of a communication terminal or, respectively, a processor of an access-point device, allow said communication terminal to execute the steps of the method according to any one of Claims 1 to 9 or, respectively, allow said access-point device to execute the steps of the method according to Claim 13.
